# EUROPEAN PATENT SPECIFICATION

(11) **EP 4 628 752 B1**
(45) Date of publication and mention of the grant of the patent: **15.07.2026**
(21) Application number: 24213560.6
(22) Date of filing: 18.11.2024
(51) Int. Cl.: F16H 9/18, F16H 55/56, F16H 63/06

(54) **CONTINUOUSLY VARIABLE TRANSMISSION AND STRADDLED VEHICLE INCLUDING SAME**
STUFENLOSES GETRIEBE UND GRÄTSCHSITZFAHRZEUG DAMIT
TRANSMISSION À VARIATION CONTINUE ET VÉHICULE À ENFOURCHER LA COMPRENANT

(30) Priority: 04.04.2024 JP 2024061013
(43) Date of publication of application: 08.10.2025
(60) Divisional application: 25194322.1
(73) Proprietor: Yamaha Hatsudoki Kabushiki Kaisha, Iwata-shi, Shizuoka 438-8501 (JP)
(72) Inventor: FUJIKURA, Kyohei, Iwata-shi, 4388501 (JP); TANAKA, Ippei, Iwata-shi, 4388501 (JP)
(74) Representative: Studio Torta S.p.A.

(56) References cited:
- EP-A1- 2 784 357
- EP-A2- 1 741 964
- US-A1- 2022 243 810
- US-B2- 7 771 299

## Description

### BACKGROUND

### Technical filed

The present invention relates to a continuously variable transmission and a straddled vehicle including the same.

### Background

There has been known a type of continuously variable transmission that cause an electric actuator to move a movable sheave. A continuously variable transmission described in Japan Laid-open Patent Application Publication No. 2018-066434 includes a non-contact position detecting sensor for detecting the axial position of a movable sheave.

The position detecting sensor described in Japan Laid-open Patent Application Publication No. 2018-066434 is configured to detect the axial position of the movable sheave based on the magnetic field of a permanent magnet; hence, the position detecting sensor is complicated in structure. EP-A-1741964 discloses a continuously variable transmission according to the preamble of claim 1.

### Description of the invention

It is an object of the present invention to provide a continuously variable transmission enabled to detect the position of a movable sheave with a simple configuration.

A continuously variable transmission according to the present invention is of an electronically controlled type and includes the features of claim 1.

The position of the movable sheave is detected based on the rotational angle of the shaft detected by the rotation sensor; hence, it is made possible to realize the position detecting mechanism for detecting the position of the movable sheave with a single configuration. As a result, it is made possible to provide the continuously variable transmission enabled to detect the position of the movable sheave with a simple configuration. Besides, the shaft is configured to be rotated in conjunction with the movement of the movable sheave; hence, it is made possible to dispose the shaft in a close position to the rotational shaft supporting the movable sheave, whereby it can be expected to enhance the accuracy of detecting the position of the movable sheave by the position detecting mechanism.

The shaft includes a cam converting a linear motion of the movable sheave in the axial direction into a rotational motion of the shaft. In this case, it is made possible to realize the position detecting mechanism with a simpler and low-cost configuration by using the cam.

The continuously variable transmission may further include a sheave drive mechanism moving the movable sheave in the axial direction. The movable sheave may include a boss portion extending in the axial direction. The sheave drive mechanism may include a drive member supported by the boss portion to be rotatable and immovable in the axial direction. The cam of the shaft may be locked by the drive member. In this case, the cam is locked by the drive member disposed in a close position to the rotational shaft; hence, it can be expected to enhance the accuracy of detecting the position of the movable sheave.

The position detecting mechanism may further include an urging member urging the shaft to one side of a rotational direction of the shaft. In this case, it is made possible to realize the position detecting mechanism with a simple and low-cost configuration.

The continuously variable transmission may further include a case accommodating the rotational shaft. The position detecting mechanism may further include a support member supporting the shaft. The case may include an opening, in which the support member is disposed, and that is opened upward when a vertical direction is defined as an up-and-down direction in a condition of the continuously variable transmission installed in a vehicle. In this case, it is made possible to set the position detecting mechanism only as a receiver for a thrust acting in the gravitational direction; hence, it can be expected to reduce the number of components. Besides, it is made easy to assemble the position detecting mechanism to the case.

The shaft may include a first end and a second end located further on a lower side than the first end and may be cantilevered at the first end thereof by the support member. In this case, it is made possible to reduce the number of components; simultaneously, it is made possible to realize the position detecting mechanism with a simple and low-cost configuration.

The support member may include a bushing disposed on the first end of the shaft. The bushing may extend along the shaft. In this case, the shaft can be inhibited from tilting with respect to the support member.

The position detecting mechanism may further include a torsion spring, urging the shaft to one side of a rotational direction of the shaft, and a support member supporting the shaft. The torsion spring may include a first straight portion that extends straight and is coupled to the support member and a second straight portion that extends straight and is coupled to the shaft. The second straight portion may extend in an identical direction to the first straight portion to be disposed on an identical imaginary line to the first straight portion as seen in an extending direction of a center axis of the torsion spring. In this case, easiness in assembling the position detecting mechanism is enhanced.

The torsion spring may further include a hook portion provided in adjacent to the second straight portion. The hook portion may have a hook shape and may be engaged with an outer peripheral surface of the shaft. In this case, the torsion spring can be fixed to the shaft and the support member without using any other members; hence, easiness in assembling the position detecting mechanism is further enhanced.

A straddled vehicle according to another aspect of the present invention includes the continuously variable transmission configured as any of the above. In the straddled vehicle according to the present aspect, it is made possible to realize the position detecting mechanism for detecting the position of the movable sheave with a simple configuration.

Overall, according to the present invention, it is made possible to provide a continuously variable transmission enabled to detect the position of a movable sheave with a simple configuration.

### Brief description of the drawings

FIG. 1 is a left side view of a straddled vehicle.
FIG. 2 is a cross-sectional top view of an engine unit.
FIG. 3 is an enlarged view of a primary pulley and a sheave drive mechanism.
FIG. 4 is an enlarged view of the primary pulley and the sheave drive mechanism.
FIG. 5 is an enlarged view of a secondary pulley and a centrifugal clutch.
FIG. 6 is an enlarged view of the secondary pulley and the centrifugal clutch.
FIG. 7 is a side view of an engine unit.
FIG. 8 is a partial cross-sectional view of a position detecting mechanism and the periphery thereof.
FIG. 9 is a partial cross-sectional view of the position detecting mechanism and the periphery thereof.
FIG. 10 is a view of a torsion spring seen in an extending direction of the center axis of the torsion spring.
FIG. 11 is a diagram for explaining a positional relation between a first coupling hole and a second coupling hole.

### Embodiments of the invention

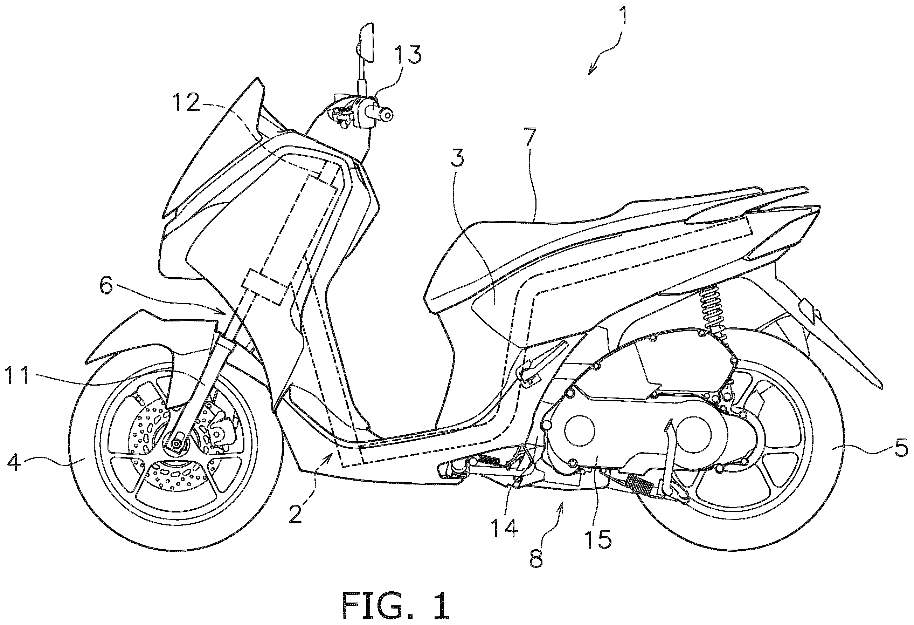

A straddled vehicle according to a preferred embodiment will be hereinafter explained with reference to drawings. FIG. 1 is a left side view of a straddled vehicle 1 according to the preferred embodiment. The straddled vehicle 1 according to the present preferred embodiment is a scooter. As shown in FIG. 1, the straddled vehicle 1 includes a vehicle body frame 2, a vehicle body cover 3, a front wheel 4, a rear wheel 5, a steering device 6, a seat 7, and an engine unit 8. It should be noted that in the present preferred embodiment, the terms "up", "down", "front", "rear", "right", and "left" are defined as referring to up, down, front, rear, right, and left directions seen from a rider seated on the seat 7.

The vehicle body cover 3 covers the vehicle body frame 2. The steering device 6 is supported by the vehicle body frame 2 so as to be tumable right and left. The steering device 6 includes a front fork 11, a steering shaft 12, and a handle member 13.

The front fork 11 supports the front wheel 4 such that the front wheel 4 is made rotatable. The steering shaft 12 is connected to the front fork 11. The steering shaft 12 is supported by the vehicle body frame 2 so as to be turnable right and left. The handle member 13 is connected to the steering shaft 12.

The seat 7 is disposed behind the handle member 13. The engine unit 8 is disposed below the seat 7. The engine unit 8 is supported by the vehicle body frame 2 so as to be pivotable up and down. The engine unit 8 supports the rear wheel 5 such that the rear wheel 5 is made rotatable. The engine unit 8 includes an engine 14 and a continuously variable transmission 15. The continuously variable transmission 15 is disposed on a lateral side of the engine 14. The continuously variable transmission 15 transmits a driving force, generated from the engine 14, to the rear wheel 5.

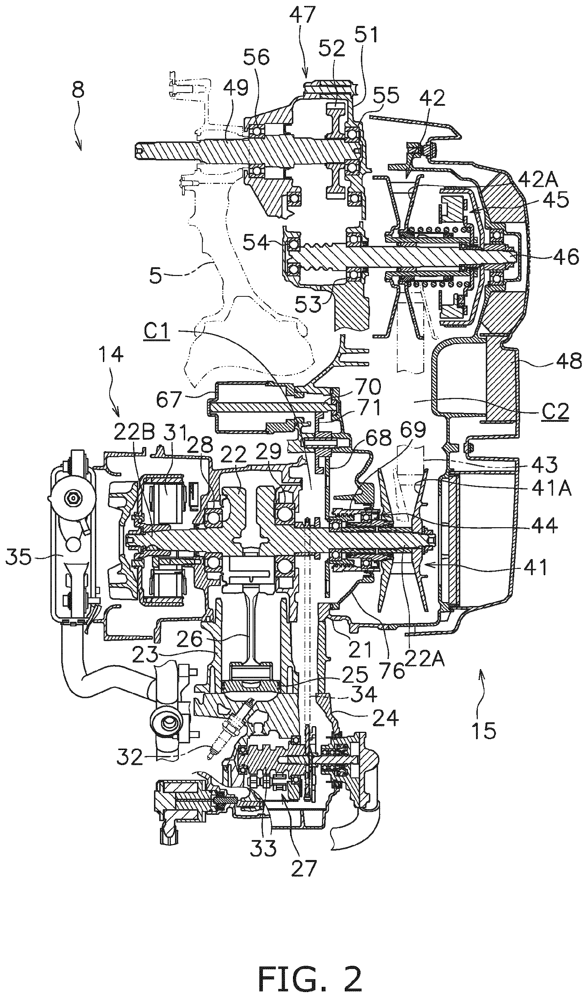

FIG. 2 is a cross-sectional top view of the engine unit 8. As shown in FIG. 2, the engine 14 includes a crankcase 21, a crankshaft 22 (exemplary rotational shaft), a cylinder body 23, a cylinder head 24, a piston 25, a connecting rod 26, and a valve actuating mechanism 27.

The crankshaft 22 is accommodated in the crankcase 21. The crankshaft 22 is rotatably supported by the crankcase 21 through bearings 28 and 29. The crankshaft 22 includes a first shaft end 22A and a second shaft end 22B. The continuously variable transmission 15 (exemplary continuously variable transmission) is connected to the first shaft end 22A. An electric power generator 31 is connected to the second shaft end 22B.

The cylinder body 23 is connected to the crankcase 21. The cylinder head 24 is connected to the cylinder body 23. The connecting rod 26 and the piston 25 are disposed inside the cylinder body 23. The piston 25 is connected to the crankshaft 22 through the connecting rod 26. An ignition device 32 is attached to the cylinder head 24. The valve actuating mechanism 27 includes a camshaft 33. A cam chain 34 is wound about the camshaft 33 and the crankshaft 22. The rotation of the crankshaft 22 is transmitted to the camshaft 33 through the cam chain 34, whereby the camshaft 33 is rotated. Accordingly, an intake valve and an exhaust valve of the engine 14 (both not shown in the drawings) are driven by the valve actuating mechanism 27.

The continuously variable transmission 15 is an electronically controlled transmission. In other words, the continuously variable transmission 15 is electrically controlled to change a gear ratio in accordance with a command signal transmitted thereto from a controller (not shown in the drawings).

As shown in FIG. 2, the continuously variable transmission 15 includes the crankshaft 22, a primary pulley 41, a secondary pulley 42, a belt 43, a sheave drive mechanism 44, a centrifugal clutch 45, an output shaft 46, a reducer 47, and a transmission case 48.

The primary pulley 41 is connected to the crankshaft 22. The primary pulley 41 includes a first groove 41A having a V shape. The secondary pulley 42 is connected to the rear wheel 5 through an axle 49. The secondary pulley 42 includes a second groove 42A having a V shape.

The belt 43 is wound about the primary pulley 41 and the secondary pulley 42. The belt 43 has a trapezoidal cross section fitted in shape to the first groove 41A and the second groove 42A. The secondary pulley 42 is connected to the output shaft 46 through the centrifugal clutch 45. The output shaft 46 is connected to the axle 49 through the reducer 47. The output shaft 46 is rotatably supported by a reducer case 51 (to be described) through bearings 53 and 54. The axle 49 is rotatably supported by the reducer case 51 through bearings 55 and 56.

The reducer 47 includes the reducer case 51 and a gear 52. The reducer case 51 accommodates the gear 52. The gear 52 transmits the rotation of the output shaft 46 to the axle 49. It should be noted that FIG. 2 illustrates only the gear 52 among a plurality of gears of the reducer 47, while omitting illustration of the rest of the plurality of gears.

The transmission case 48 axially covers the primary pulley 41, the secondary pulley 42, the belt 43, the centrifugal clutch 45, and the output shaft 46.

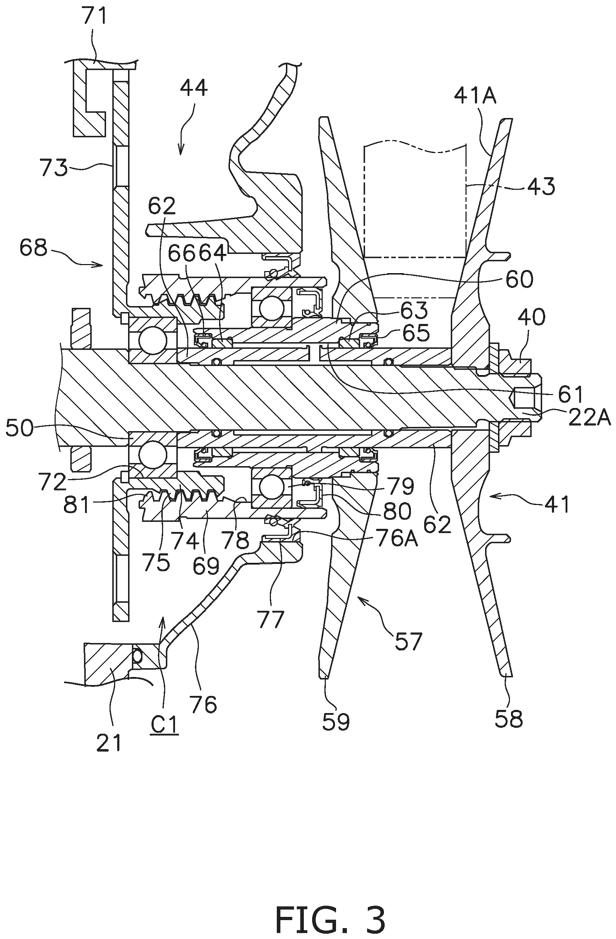

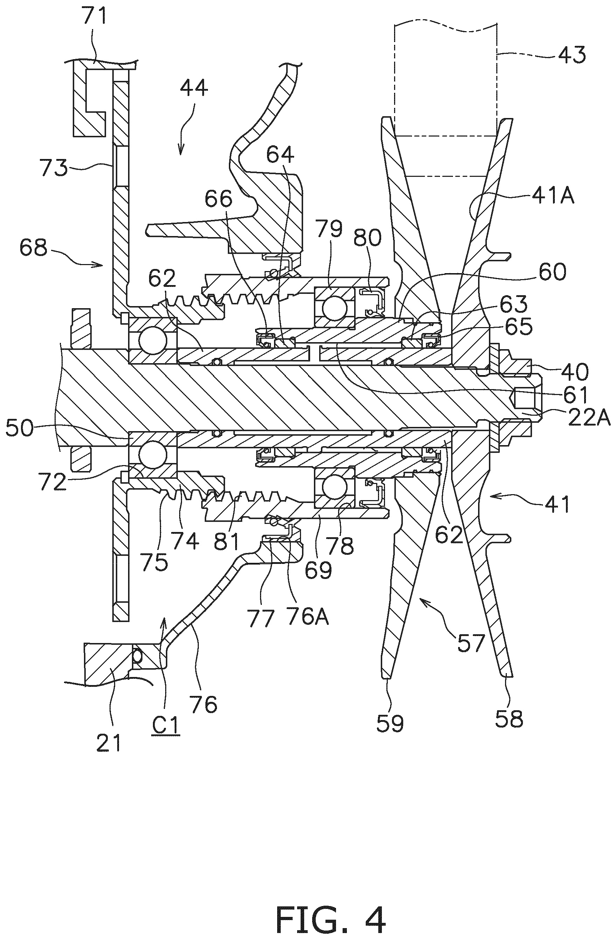

FIGS. 3 and 4 are enlarged views of the primary pulley 41 and the sheave drive mechanism 44. FIGS. 3 and 4 are partially enlarged views of FIG. 2. As shown in FIGS. 3 and 4, the primary pulley 41 includes a first movable sheave 57 (exemplary movable sheave) and a first stationary sheave 58.

The first movable sheave 57 is supported by the crankshaft 22 to be movable in an axial direction of the crankshaft 22 (hereinafter simply referred to as "the axial direction"). The first movable sheave 57 is disposed on the inner side (the left side in FIG. 3) of the first stationary sheave 58 in the axial direction.

The first movable sheave 57 is supported by the crankshaft 22 to be non-rotatable in a circumferential direction of the crankshaft 22. The first movable sheave 57 is attached to the crankshaft 22 with one or more splines. The first movable sheave 57 is rotated unitarily with the crankshaft 22.

The first movable sheave 57 includes a first sheave portion 59 and a first boss portion 60. The first sheave portion 59 is disposed to face the first stationary sheave 58. The first sheave portion 59 is fixed to the outer peripheral surface of the first boss portion 60. The first groove 41A is provided between the first sheave portion 59 and the first stationary sheave 58. The first boss portion 60 axially extends from the first sheave portion 59. The first boss portion 60 includes a first boss hole 61. The first boss hole 61 extends in the axial direction. The crankshaft 22 extends through the first boss hole 61.

The crankshaft 22 includes an outer shaft 62. The outer shaft 62 is attached to the outer peripheral surface of the first shaft end 22A. The first movable sheave 57 is attached to the outer shaft 62 with one or more splines. The outer shaft 62 extends through the first boss hole 61. A first bushing 63 and a second busing 64 are press-fitted into the first boss hole 61. The first and second bushings 63 and 64 are each made of a sliding material. The first and second bushings 63 and 64 are disposed between the inner peripheral surface of the first boss hole 61 and the outer peripheral surface of the outer shaft 62. When the first movable sheave 57 is axially moved, the first and second bushings 63 and 64 are axially slid against the outer shaft 62. The first boss hole 61 is filled with a lubricant such as grease. The first boss portion 60 and the outer shaft 62 are sealed therebetween by oil seals 65 and 66.

The first stationary sheave 58 is fixed to the crankshaft 22. The first stationary sheave 58 is fixed to the crankshaft 22 by a nut 40. The first stationary sheave 58 is fixed to the crankshaft 22, while being axially immovable. The first stationary sheave 58 is fixed to the crankshaft 22, while being non-rotatable with respect thereto. The first stationary sheave 58 is rotated unitarily with the crankshaft 22.

The sheave drive mechanism 44 axially moves the first movable sheave 57. As shown in FIG. 2, the sheave drive mechanism 44 includes an electric actuator 67, a first drive member 68, and a second drive member 69 (exemplary drive member).

The electric actuator 67 is, for instance, an electric motor. The electric actuator 67 may be a type of actuator other than the electric motor. The electric actuator 67 includes a rotational shaft 70. The rotational shaft 70 is connected to the first drive member 68 through a gear 71. The rotation of the rotational shaft 70 is transmitted to the first drive member 68 through the gear 71.

As shown in FIGS. 3 and 4, the first drive member 68 includes a first hole 72. The first hole 72 extends to axially penetrate the first drive member 68. The crankshaft 22 is inserted through the first hole 72. The first drive member 68 is supported by the crankshaft 22 through a bearing 50. The first drive member 68 is supported by the crankshaft 22, while being rotatable with respect thereto. The first drive member 68 is supported by the crankshaft 22, while being axially immovable with respect thereto.

The first drive member 68 includes a gear portion 73 and a feed screw portion 74. The gear portion 73 radially extends from the feed screw portion 74 about the crankshaft 22. The gear portion 73 is meshed with the gear 71. The rotation of the rotational shaft 70 of the electric actuator 67 is transmitted to the gear portion 73 through the gear 71. Accordingly, the first drive member 68 is rotated. The feed screw portion 74 axially extends from the gear portion 73. The feed screw portion 74 is provided with a first screw 75 on the outer peripheral surface thereof.

A crankcase cover 76 is attached to the crankcase 21. The crankcase cover 76 includes an opening 76A. The opening 76A is disposed to face the primary pulley 41. The second drive member 69 extends through the opening 76A of the crankcase 21. The second drive member 69 and the crankcase cover 76 are sealed therebetween by an oil seal 77.

The second drive member 69 includes a second hole 78. The second hole 78 extends to axially penetrate the second drive member 69. The crankshaft 22 and the first boss portion 60 extend through the second hole 78.

The second drive member 69 is supported by the first boss portion 60 through a bearing 79. The second drive member 69 is supported by the first boss portion 60, while being rotatable with respect thereto. The second drive member 69 is supported by the first boss portion 60, while being axially immovable with respect thereto. The second drive member 69 is axially moved unitarily with the first movable sheave 57. The second drive member 69 and the first boss portion 60 are sealed therebetween by an oil seal 80. The second drive member 69 is provided with a second screw 81 on the inner peripheral surface thereof. The second screw 81 is meshed with the first screw 75. When the first drive member 68 is rotated, the second drive member 69 is axially moved as shown in FIG. 4. Accordingly, the first movable sheave 57 is axially moved.

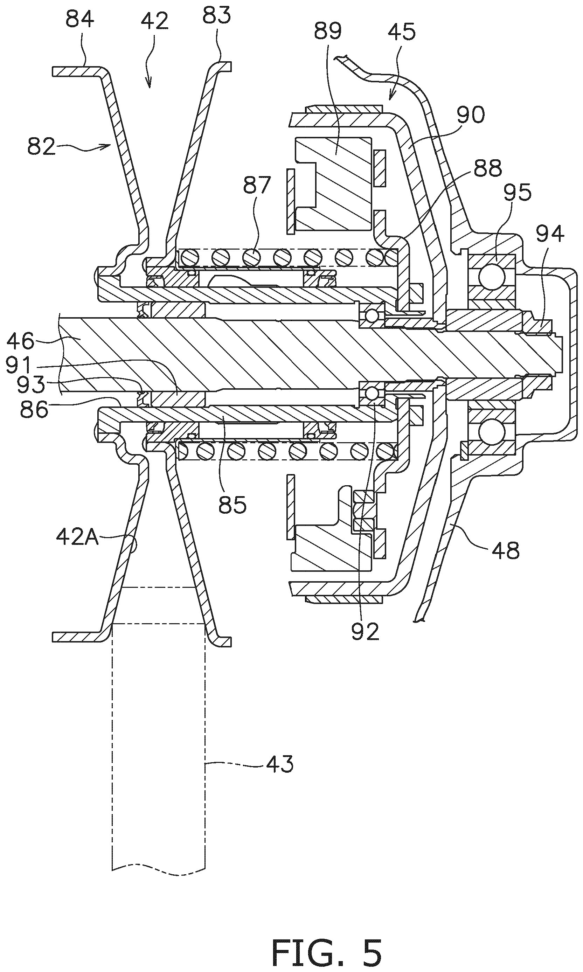

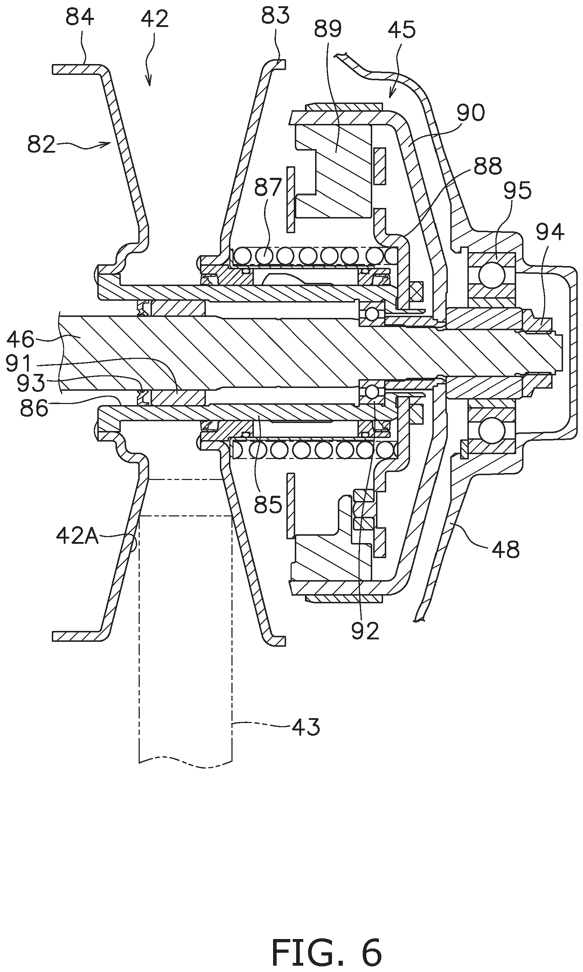

FIGS. 5 and 6 are enlarged views of the secondary pulley 42 and the centrifugal clutch 45. The secondary pulley 42 includes a second stationary sheave 82 and a second movable sheave 83. The second stationary sheave 82 is supported by the output shaft 46, while being rotatable with respect thereto. The second stationary sheave 82 is supported by the output shaft 46, while being axially immovable with respect thereto.

The second stationary sheave 82 includes a second sheave portion 84 and a second boss portion 85. The second sheave portion 84 is disposed to face the second movable sheave 83. The second groove 42A is provided between the second sheave portion 84 and the second movable sheave 83. The second boss portion 85 axially extends from the second sheave portion 84. The second boss portion 85 includes a second boss hole 86. The second boss hole 86 extends to axially penetrate the second boss portion 85.

The output shaft 46 is rotatably supported by the transmission case 48 through a bearing 95. The output shaft 46 extends through the second boss hole 86. A bushing 91 is press-fitted into the second boss hole 86. The bushing 91 is made of a sliding material. The bushing 91 is disposed between the inner peripheral surface of the second boss hole 86 and the outer peripheral surface of the output shaft 46.

The second boss portion 85 is supported by the bushing 91 and a bearing 92, while being rotatable with respect to the output shaft 46. The second boss hole 86 is filled with a lubricant such as grease. The second boss portion 85 and the output shaft 46 are sealed therebetween by an oil seal 93.

The second movable sheave 83 is disposed on the outer side (the right side in FIG. 5) of the second stationary sheave 82 in the axial direction. The second movable sheave 83 is supported by the second boss portion 85, while being non-rotatable thereto. The second movable sheave 83 is rotated unitarily with the second stationary sheave 82. The second movable sheave 83 is supported by the second boss portion 85, while being axially movable with respect thereto. For example, the second movable sheave 83 is attached to the second boss portion 85 with one or more splines. A spring 87 is disposed between the second movable sheave 83 and the centrifugal clutch 45. The spring 87 urges the second movable sheave 83 toward the second stationary sheave 82.

As shown in FIG. 5, when the vehicle velocity is less than a predetermined coupling velocity, the centrifugal clutch 45 is set in a disengaged state that the continuously variable transmission 15 is decoupled from the rear wheel 5. As shown in FIG. 6, when the vehicle velocity is greater than or equal to the coupling velocity, the centrifugal clutch 45 is set in an engaged state that the continuously variable transmission 15 is coupled to the rear wheel 5.

The centrifugal clutch 45 includes a drive plate 88, clutch shoes 89, and a clutch outer 90. The drive plate 88 is fixed to the second boss portion 85. The drive plate 88 is rotated unitarily with the second boss portion 85.

The clutch shoes 89 are connected to the drive plate 88. The clutch shoes 89 are rotated unitarily with the drive plate 88. The clutch shoes 89 are supported by the drive plate 88, while being radially movable with respect thereto. The clutch shoes 89 are urged radially inward by clutch springs (not shown in the drawings).

The clutch outer 90 is fixed to the output shaft 46 by a nut 94. The clutch outer 90 is rotated unitarily with the output shaft 46. The clutch outer 90 radially covers the clutch shoes 89.

When the vehicle velocity is less than the predetermined coupling velocity, the clutch shoes 89 are kept separated from the clutch outer 90 by the urging forces of the clutch springs. Because of this, the centrifugal clutch 45 is set in the disengaged state, whereby the rotation of the secondary pulley 42 is not transmitted to the output shaft 46. When the vehicle velocity is greater than or equal to the coupling velocity, the clutch shoes 89 are moved radially outward by centrifugal forces against the urging forces of the clutch springs. Accordingly, the clutch shoes 89 are contacted to the clutch outer 90, whereby the centrifugal clutch 45 is set in the engaged state. When the centrifugal clutch 45 is set in the engaged state, the rotation of the secondary pulley 42 is transmitted to the output shaft 46 through the drive plate 88, the clutch shoes 89, and the clutch outer 90.

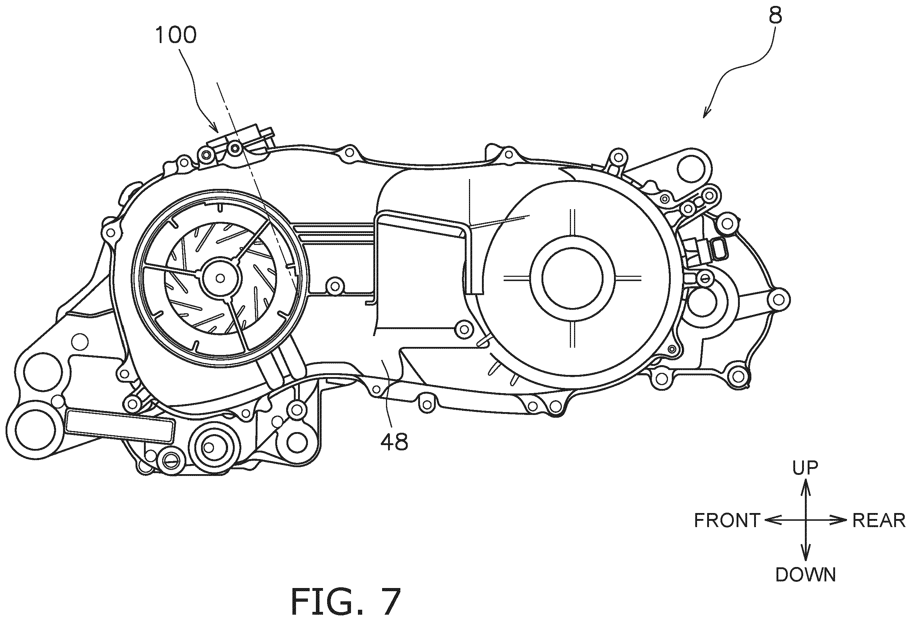

FIG. 7 is a left side view of the engine unit 8. As shown in FIG. 7, the continuously variable transmission 15 includes a position detecting mechanism 100. The position detecting mechanism 100 is a mechanism for detecting the axial position of the first movable sheave 57.

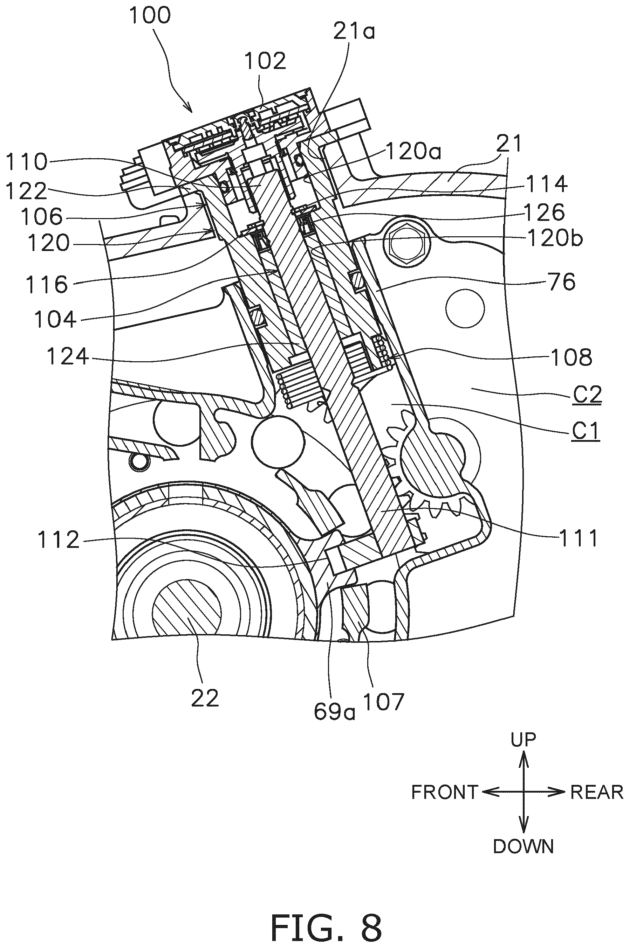

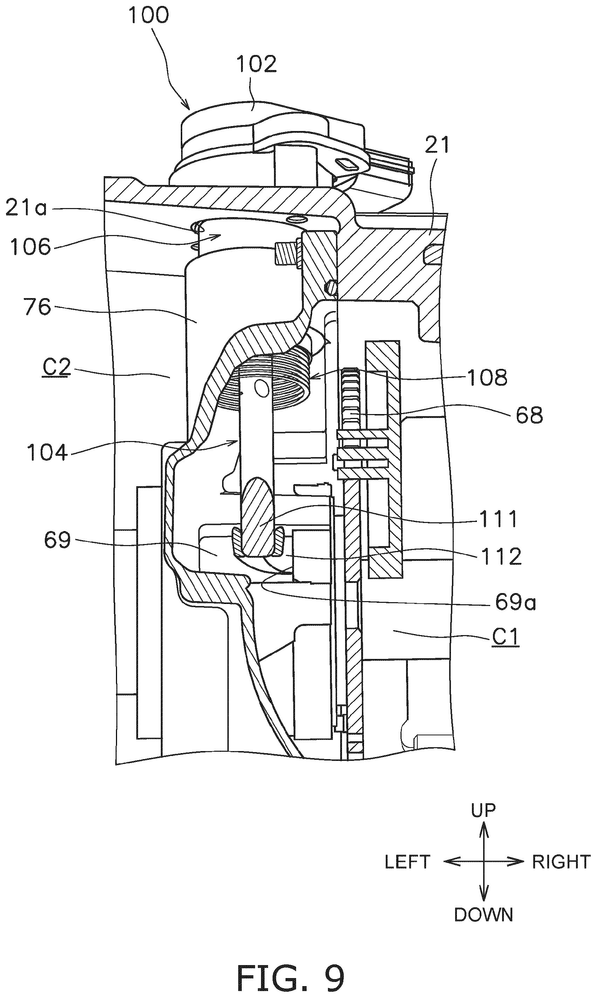

FIGS. 8 and 9 are partial cross-sectional views of the position detecting mechanism 100 and the periphery thereof. The position detecting mechanism 100 includes a rotation sensor 102, a shaft 104, a support member 106, and a torsion spring 108 (exemplary urging member). The position detecting mechanism 100 detects the position of the first movable sheave 57 based on the rotational angle of the shaft 104 detected by the rotation sensor 102.

The rotation sensor 102 is disposed outside the crankcase 21. The rotation sensor 102 is, for instance, a potentiometer. The rotation sensor 102 is connected to the shaft 104 to detect the rotational angle of the shaft 104. The rotation sensor 102 detects the rotational angle of the shaft 104 and outputs a signal depending on the result of detection to the controller (not shown in the drawings).

The shaft 104 is rotated in conjunction with the movement of the first movable sheave 57. As shown in FIGS. 7 and 8, the shaft 104 extends in approximately the up-and-down direction. It should be noted that in FIG. 7, the center axis of the shaft 104 is depicted with a dashed dotted line. The shaft 104 is disposed to penetrate the crankcase 21 and the transmission case 48. Speaking in detail, the shaft 104 extends through both a crank chamber C1 in the crankcase 21 and a belt chamber C2 for accommodating the belt 43. The shaft 104 is disposed in both the crank chamber C1 and the belt chamber C2.

The shaft 104 slightly tilts with respect to the vertical direction as seen in the vehicle side view. The shaft 104 includes a first end 110, a second end 111, and a cam 112. The first end 110 is the upper end of the shaft 104. The first end 110 is connected to the rotation sensor 102. The shaft 104 is cantilevered at the first end 110 by the support member 106. An E ring 114 is disposed on the outer peripheral surface of the first end 110 of the shaft 104. The shaft 104 is prevented from being detached from the support member 106 by the E ring 114 and a washer 116 disposed in adjacent to the E ring 114.

The second end 111 is located further on a lower side than the first end 110. The second end 111 is located further on a vehicle rear side than the first end 110. Because of this, the shaft 104 extends downward and rearward from the first end 110. The second end 111 is disposed further on a lower side than the support member 106.

The cam 112 converts the linear motion of the first movable sheave 57 in the axial direction into the rotational motion of the shaft 104. In the present preferred embodiment, the cam 112 converts the axial linear motion of the first movable sheave 57 into the rotational motion of the shaft 104 through the second drive member 69. The cam 112 is locked by the second drive member 69. The cam 112 is disposed on the second end 111. The cam 112 is fixed to the outer peripheral surface of the second end 111. The cam 112 is fixed to the shaft 104 at the second end 111 by press-fitting. The cam 112 is rotated unitarily with the shaft 104. The cam 112 radially extends about the shaft 104 from the outer peripheral surface of the second end 111.

The cam 112 faces a lock protrusion 69a of the second drive member 69 in the axial direction. The lock protrusion 69a protrudes outward in the radial direction of the crankshaft 22 from the outer peripheral surface of the second drive member 69. The lock protrusion 69a is restricted from rotating about the crankshaft 22 by a pair of restriction portions 107 provided inside the crankcase 21. The distal end of the cam 112 is shaped to curve in the direction oriented toward the lock protrusion 69a. The cam 112 is disposed on the left side of the lock protrusion 69a. The cam 112 is locked by the lock protrusion 69a. The distal end of the cam 112 is constantly in contact with the lock protrusion 69a by the urging force of the torsion spring 108.

The support member 106 supports the shaft 104 such that the shaft 104 is made rotatable. The support member 106 is fixed to the crankcase 21. The support member 106 is disposed in both the crank chamber C1 and the belt chamber C2. The support member 106 is disposed in an opening 21a provided in the crankcase 21. The opening 21a is opened upward.

The support member 106 includes a tubular portion 120, a flange portion 122, an impregnated bushing 124 (exemplary bushing), and an oil seal 126. The tubular portion 120 extends in approximately the up-and-down direction. The tubular portion 120 penetrates the opening 21a. The tubular portion 120 has a cylindrical shape and is penetrated by the shaft 104.

The tubular portion 120 includes a first hole 120a and a second hole 120b. The first end 110 of the shaft 104 is disposed in the first hole 120a. The E ring 114 and the washer 116 are disposed inside the first hole 120a.

The second hole 120b is disposed below the first hole 120a. The dimension of the second hole 12b is larger than that of the first hole 120a in the up-and-down direction. The inner diameter of the second hole 120b is smaller than that of the first hole 120a. The washer 116 and the E ring 114 are disposed on a step formed by the first hole 120a and the second hole 120b.

The flange portion 122 is disposed on the upper end of the tubular portion 120. The outer diameter of the flange portion 122 is larger than the inner diameter of the opening 21a. The flange portion 122 is disposed on the upper end surface of the opening 21a of the crankcase 21.

The impregnated bushing 124 has a cylindrical shape. The impregnated bushing 124 is disposed on the first end 110. The impregnated bushing 124 is disposed in the second hole 120b of the tubular portion 120. The impregnated bushing 124 is fixed by press-fitting. The impregnated bushing 124 extends along the shaft 104. The impregnated bushing 124 is penetrated by the shaft 104, whereby the shaft 104 is inhibited from tilting with respect to the support member 106.

The oil seal 126 is disposed in the second hole 120b. The oil seal 126 is disposed between the washer 116 and the impregnated bushing 124.

The torsion spring 108 urges the shaft 104 to one side of the rotational direction of the shaft 104. The torsion spring 108 urges the shaft 104 such that the distal end of the cam 112 is constantly in contact with the lock protrusion 69a in the axial direction. The torsion spring 108 is disposed below the support member 106. The torsion spring 108 is disposed radially outside the shaft 104. The torsion spring 108 is connected to the tubular portion 120 of the support member 106 and the shaft 104.

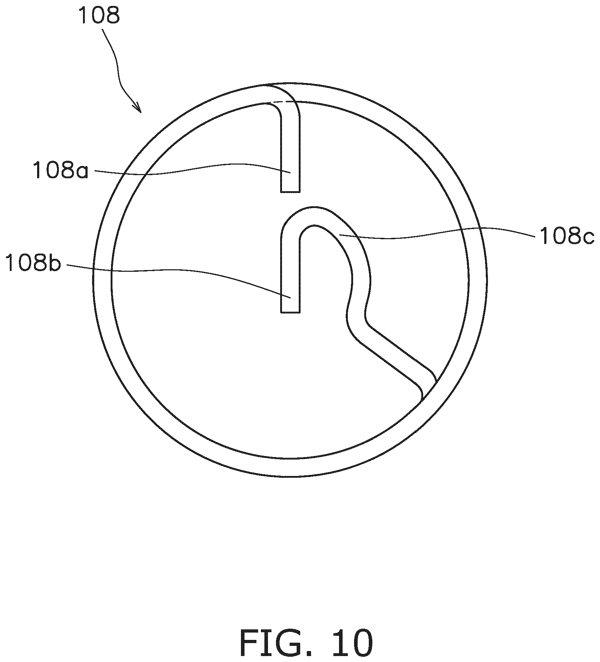

FIG. 10 is a view of the torsion spring 108 seen in the extending direction of the center axis of the torsion spring 108. The center axis of the torsion spring 108 is matched with that of the shaft 104. The torsion spring 108 includes a first straight portion 108a and a second straight portion 108b. The first straight portion 108a is disposed on the upper end of the torsion spring 108 and is coupled to the support member 106. The first straight portion 108a extends straight. Speaking in detail, the first straight portion 108a extends along the radial direction of the shaft 104. The first straight portion 108a extends toward the center axis of the torsion spring 108. The first straight portion 108a is inserted into a first coupling hole 130 provided in the outer peripheral surface of the tubular portion 120.

The second straight portion 108b is disposed on the lower end of the torsion spring 108 and is coupled to the shaft 104. The second straight portion 108b extends straight. The second straight portion 108b extends along the radial direction of the shaft 104. As shown in FIG. 10, when seen in the extending direction of the center axis of the torsion spring 108, the second straight portion 108b extends in the identical direction to the first straight portion 108a to be disposed on an identical imaginary line to the first straight portion 108a. In other words, the distal end of the second straight portion 108b faces the identical direction to that of the first straight portion 108a.

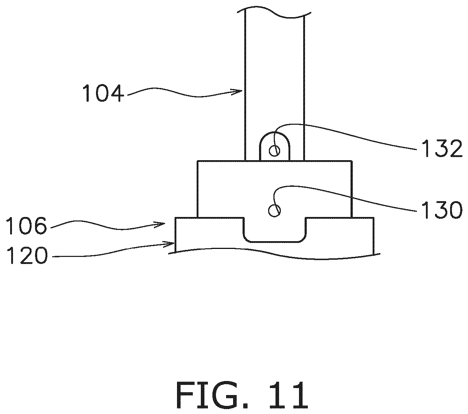

The second straight portion 108b is inserted into a second coupling hole 132 provided in the outer peripheral surface of the shaft 104. As shown in FIG. 11, the second coupling hole 132 is opened in the identical direction to the first coupling hole 130. Because of this, when the first straight portion 108a is inserted into the first coupling hole 130, for instance, the second straight portion 108b can be easily inserted into the second coupling hole 132.

As shown in FIG. 10, the torsion spring 108 further includes a hook portion 108c. The hook portion 108c is provided in adjacent to the second straight portion 108b. The hook portion 108c has a hook shape. The hook portion 108c is engaged with the outer peripheral surface of the shaft 104. Accordingly, the torsion spring 108 can be fixed to the shaft 104 and the support member 106 without using any other members.

In the continuously variable transmission 15 explained above, when the vehicle velocity is greater than or equal to the coupling velocity, the centrifugal clutch 45 is set in the engaged state. Accordingly, the rotation of the crankshaft 22 is transmitted to the rear wheel 5 through the primary pulley 41, the belt 43, the secondary pulley 42, the centrifugal clutch 45, the output shaft 46, the reducer 47, and the axle 49. This causes the straddled vehicle 1 to travel.

Besides, the first movable sheave 57 is moved by the sheave drive mechanism 44, whereby the gear ratio of the continuously variable transmission 15 is electrically controlled. It should be noted that the gear ratio of the continuously variable transmission 15 means a ratio of the rotational speed of the crankshaft 22 to that of the output shaft 46.

Speaking in detail, when the first drive member 68 is rotated by the electric actuator 67 in a given direction, the second drive member 69 is moved to the outer side in the axial direction as shown in FIG. 4. Accordingly, the first movable sheave 57 is moved together with the second drive member 69 to the outer side in the axial direction. In conjunction with the movement of the second drive member 69 to the outer side in the axial direction, the cam 112 is pressed at the distal end thereof onto the lock protrusion 69a of the second drive member 69 and is accordingly rotated against the urging force of the torsion spring 108, whereby the shaft 104 is rotated. When the first movable sheave 57 is moved to the outer side in the axial direction, the first groove 41A is reduced in width between the first movable sheave 57 and the first stationary sheave 58. Accordingly, the diameter at the wound position of the belt 43 in the primary pulley 41 (hereinafter referred to as "first wound diameter") is increased. When the first wound diameter is increased, the diameter at the wound position of the belt 43 in the secondary pulley 42 (hereinafter referred to as "second wound diameter") is reduced. Accordingly, the gear ratio is reduced. It should be noted that in this case, as shown in FIG. 6, the second movable sheave 83 is moved to the outer side in the axial direction against the urging force of the spring 87, whereby the second groove 42A is increased in width.

When the first drive member 68 is rotated by the electric actuator 67 in the reverse direction to the given direction, the second drive member 69 is moved to the inner side in the axial direction as shown in FIG. 3. Accordingly, the first movable sheave 57 is moved together with the second drive member 69 to the inner side in the axial direction. In conjunction with the movement of the second drive member 69 to the inner side in the axial direction, the cam 112 is rotated by the urging force of the torsion spring 108 to the side that the lock protrusion 69a of the second drive member 69 is pressed, whereby the shaft 104 is rotated to the side that the shaft 104 is urged by the torsion spring 108. When the first movable sheave 57 is moved to the inner side in the axial direction, the first groove 41A is increased in width between the first movable sheave 57 and the first stationary sheave 58. Accordingly, the first wound diameter is reduced. When the first wound diameter is reduced, the second wound diameter is increased. Accordingly, the gear ratio is increased. It should be noted that in this case, as shown in FIG. 5, the second movable sheave 83 is moved to the inner side in the axial direction by the urging force of the spring 87, whereby the second groove 42A is reduced in width.

In the straddled vehicle 1 configured as described above, the position of the first movable sheave 57 is detected in the continuously variable transmission 15 based on the rotational angle of the shaft 104 detected by the rotation sensor 102; hence, it is made possible to realize the position detecting mechanism 100 for detecting the position of the first movable sheave 57 with a simple configuration. Besides, the shaft 104 is configured to be rotated in conjunction with the movement of the first movable sheave 57; hence, it is made possible to dispose the shaft 104 in the close position to the crankshaft 22 supporting the first movable sheave 57, whereby it can be expected to enhance the accuracy of detecting the position of the first movable sheave 57 by the position detecting mechanism 100. In the present preferred embodiment, the shaft 104 is configured such that the cam 112 is locked by the second drive member 69 disposed in the close position to the crankshaft 22; hence, it can be expected to enhance the accuracy of detecting the position of the first movable sheave 57.

One preferred embodiment of the present invention has been explained above.

The straddled vehicle 1 is not limited to the scooter, and alternatively, may be a vehicle of another type such as a street type, an off-road type, or a moped type.

### REFERENCE SIGNS LIST

1: Straddled vehicle, 15: Continuously variable transmission, 21: Crankcase, 21a: Opening, 22: Crankshaft, 44: Sheave drive mechanism, 57: First movable sheave, 60: First boss portion, 69: Second drive member, 100: Position detecting mechanism, 102: Rotation sensor, 104: Shaft, 106: Support member, 108: Torsion spring, 108a: First straight portion, 108b: Second straight portion, 108c: Hook portion, 110: First end, 111: Second end, 112: Cam, 124: Impregnated bushing

## Claims

1. A continuously variable transmission (15) of an electronically controlled type comprising:
a rotational shaft (22);
a movable sheave (57) supported by the rotational shaft (22) to be movable in an axial direction of the rotational shaft (22); and
a position detecting mechanism (100) including a shaft (104) and a rotation sensor (102), the shaft (104) being rotated in conjunction with movement of the movable sheave (57), the rotation sensor (102) detecting a rotational angle of the shaft (22), the position detecting mechanism (102) detecting a position of the movable sheave (57) based on the rotational angle of the shaft (22) detected by the rotation sensor (102);
**characterized in that** the shaft (104) includes a cam (112) converting a linear motion of the movable sheave (57) in the axial direction into a rotational motion of the shaft (104).

2. The continuously variable transmission according to claim 1, further comprising:
a sheave drive mechanism (44) moving the movable sheave (57) in the axial direction, wherein
the movable sheave (57) includes a boss portion (60) extending in the axial direction,
the sheave drive mechanism (44) includes a drive member (69) supported by the boss portion to be rotatable and immovable in the axial direction, and
the cam (112) of the shaft (104) is locked by the drive member (69) .

3. The continuously variable transmission according to any one of claims 1 to 2, wherein the position detecting mechanism (100) further includes an urging member (108) urging the shaft to one side of a rotational direction of the shaft (104).

4. The continuously variable transmission according to any one of claims 1 to 3, further comprising:
a case (21) in which the rotational shaft (104) is accommodated, wherein
the position detecting mechanism (100) further includes a support member (106) supporting the shaft (104), and
the case (21) includes an opening (21a) in which the support member (106) is disposed, the opening (21) being opened upward when a vertical direction is defined as an up-and-down direction in a condition of the continuously variable transmission (15) is installed in a vehicle (1).

5. The continuously variable transmission according to claim 4, wherein the shaft (104) includes a first end (110) and a second end (111) located below the first end (110), the shaft (104) being cantilevered at the first end (110) thereof by the support member (106).

6. The continuously variable transmission according to claim 5, wherein
the support member (106) includes a bushing (124) disposed on the first end (110) of the shaft (104), and
the bushing (124) extends along the shaft (104).

7. The continuously variable transmission according to any one of claims 1 to 6, wherein
the position detecting mechanism (100) further includes a torsion spring (108) and a support member (106), the torsion spring (108) urging the shaft (104) to one side of a rotational direction of the shaft (104), the support member (106) supporting the shaft (104),
the torsion spring (108) includes a first straight portion (108a) and a second straight portion (108b), the first straight portion (108a) extending straight, the first straight portion (108a) being coupled to the support member (106), the second straight portion (108b) extending straight, the second straight portion (108b) being coupled to the shaft (104), and
the second straight portion (108b) extends in an identical direction to the first straight portion (108a) to be disposed on an identical imaginary line to the first straight portion (108a) as seen in an extending direction of a center axis of the torsion spring (108).

8. The continuously variable transmission according to claim 7, wherein
the torsion spring (108) further includes a hook portion (108c) provided in adjacent to the second straight portion (108b), and
the hook portion (108c) has a hook shape, the hook portion (108) being engaged with an outer peripheral surface of the shaft (104).

9. A straddled vehicle (1) comprising the continuously variable transmission (15) as recited in any one of claims 1 to 8.

## Patentansprüche

1. Stufenloses Getriebe (15) eines elektronisch gesteuerten Typs, umfassend:
eine Drehwelle (22);
eine bewegliche Scheibe (57), die von der Drehwelle (22) so getragen wird, dass sie in einer axialen Richtung der Drehwelle (22) bewegt werden kann; und
einen Positions-Erfassungsmechanismus (100), der eine Welle (104) sowie einen Drehungs-Sensor (102) einschließt, wobei die Welle (104) zusammen mit einer Bewegung der beweglichen Scheibe (57) gedreht wird, der Drehungs-Sensor (102) einen Drehwinkel der Welle (22) erfasst, der Positions-Erfassungsmechanismus (102) eine Position der beweglichen Scheibe (57) auf Basis des durch den Drehungs-Sensor (102) erfassten Drehwinkels der Welle (22) erfasst;
**dadurch gekennzeichnet, dass** die Welle (104) einen Nocken (112) einschließt, der eine lineare Bewegung der beweglichen Scheibe (57) in der axialen Richtung in eine Drehbewegung der Welle (104) umwandelt.

2. Stufenloses Getriebe nach Anspruch 1, des Weiteren umfassend:
einen Scheiben-Antriebsmechanismus (44), der die bewegliche Scheibe (57) in der axialen Richtung bewegt, wobei
die bewegliche Scheibe (57) einen Nabenabschnitt (60) einschließt, der sich in der axialen Richtung erstreckt,
der Scheiben-Antriebsmechanismus (44) ein Antriebselement (69) einschließt, das über den Nabenabschnitt so gelagert ist, dass es gedreht werden kann und in der axialen Richtung unbeweglich ist, und
der Nocken (112) der Welle (104) durch das Antriebselement (69) arretiert wird.

3. Stufenloses Getriebe nach einem der Ansprüche 1 bis 2, wobei der Positions-Erfassungsmechanismus (100) des Weiteren ein Drückelement (108) einschließt, das die Welle zu einer Seite einer Drehrichtung der Welle (104) drückt.

4. Stufenloses Getriebe nach einem der Ansprüche 1 bis 3, des Weiteren umfassend:
ein Gehäuse (21), in dem die Drehwelle (104) aufgenommen ist, wobei
der Positions-Erfassungsmechanismus (100) des Weiteren ein Lagerungselement (106) einschließt, das die Welle (104) lagert, und
das Gehäuse (21) eine Öffnung (21a) einschließt, in der das Lagerungselement (106) angeordnet ist, wobei sich die Öffnung (21) nach oben öffnet, wenn in einem Zustand, in dem das stufenlose Getriebe (15) in einem Fahrzeug (1) installiert ist, eine vertikale Richtung als eine senkrechte Richtung definiert ist.

5. Stufenloses Getriebe nach Anspruch 4, wobei die Welle (104) ein erstes Ende (110) und ein zweites Ende (111) einschließt, das sich unterhalb des ersten Endes (110) befindet, und die Welle (104) über das Lagerungselement (106) an ihrem ersten Ende (110) freitragend gelagert ist.

6. Stufenloses Getriebe nach Anspruch 5, wobei
das Lagerungselement (106) eine an dem ersten Ende (110) der Welle (104) angeordnete Buchse (124) einschließt, und
die Buchse (124) sich entlang der Welle (104) erstreckt.

7. Stufenloses Getriebe nach einem der Ansprüche 1 bis 6, wobei
der Positions-Erfassungsmechanismus (100) des Weiteren eine Torsionsfeder (108) sowie ein Lagerungselement (106) einschließt, die Torsionsfeder (108) die Welle (104) zu einer Seite einer Drehrichtung der Welle (104) drückt und das Lagerungselement (106) die Welle (104) lagert,
die Torsionsfeder (108) einen ersten geraden Abschnitt (108a) sowie einen zweiten geraden Abschnitt (108b) einschließt, der erste gerade Abschnitt (108a) sich gerade erstreckt, der erste gerade Abschnitt (108a) mit dem Lagerungselement (106) gekoppelt ist, der zweite gerade Abschnitt (108b) sich gerade erstreckt und der zweite gerade Abschnitt (108b) mit der Welle (104) gekoppelt ist, und wobei
der zweite gerade Abschnitt (108b) sich in einer zu der des ersten geraden Abschnitts (108a) identischen Richtung so erstreckt, dass er, in einer Richtung gesehen, in der sich eine Mittelachse der Torsionsfeder (108) erstreckt, auf einer zu dem ersten geraden Abschnitt (108a) identischen imaginären Linie angeordnet ist.

8. Stufenloses Getriebe nach Anspruch 7, wobei
die Torsionsfeder (108) des Weiteren einen Hakenabschnitt (108c) einschließt, der an den zweiten geraden Abschnitt (108b) angrenzt, und
der Hakenabschnitt (108c) eine Hakenform hat, und der Hakenabschnitt (108) in Eingriff mit einer Außenumfangsfläche der Welle (104) ist.

9. Spreizsitz-Fahrzeug (1), umfassend das stufenlose Getriebe (15) nach einem der Ansprüche 1 bis 8.

## Revendications

1. Transmission à variation continue (15) de type à commande électronique, comprenant :
un arbre rotatif (22) ;
une joue de polie mobile (57) supportée par l'arbre rotatif (22) de manière à pouvoir se déplacer dans la direction axiale de l'arbre rotatif (22) ; et
un mécanisme de détection de position (100) comportant un arbre (104) et un capteur de rotation (102), l'arbre (104) tournant en conjonction avec le mouvement de la joue de poulie mobile (57), le capteur de rotation (102) détectant un angle de rotation de l'arbre (22), le mécanisme de détection de position (102) détectant une position de la joue mobile (57) en fonction de l'angle de rotation de l'arbre (22) détecté par le capteur de rotation (102) ;
**caractérisée en ce que** l'arbre (104) comporte une came (112) qui convertit un mouvement linéaire de la joue de poulie mobile (57) dans la direction axiale en un mouvement de rotation de l'arbre (104).

2. Transmission à variation continue selon la revendication 1, comprenant en outre :
un mécanisme d'entraînement de joue de poulie (44) déplaçant la joue de poulie mobile (57) dans la direction axiale, dans lequel
la poulie mobile (57) comporte une partie en saillie (60) s'étendant dans la direction axiale,
le mécanisme d'entraînement de joue de poulie (44) comporte un élément d'entraînement (69) supporté par la partie en saillie de manière à pouvoir tourner et à être immobile dans la direction axiale, et
la came (112) de l'arbre (104) est bloquée par l'élément d'entraînement (69).

3. Transmission à variation continue selon l'une quelconque des revendications 1 à 2, dans laquelle le mécanisme de détection de position (100) comporte en outre un élément de poussée (108) poussant l'arbre vers un côté d'un sens de rotation de l'arbre (104).

4. Transmission à variation continue selon l'une quelconque des revendications 1 à 3, comprenant en outre :
un carter (21) dans lequel est logé l'arbre rotatif (104), dans lequel
le mécanisme de détection de position (100) comporte en outre un élément de support (106) supportant l'arbre (104), et
le carter (21) comporte une ouverture (21a) dans laquelle est disposé l'élément de support (106), l'ouverture (21) étant orientée vers le haut lorsqu'une direction verticale est définie comme une direction de haut en bas dans un état où la transmission à variation continue (15) est montée dans un véhicule (1).

5. Transmission à variation continue selon la revendication 4, dans laquelle l'arbre (104) comporte une première extrémité (110) et une seconde extrémité (111) située en dessous de la première extrémité (110), l'arbre (104) étant en porte-à-faux au niveau de sa première extrémité (110) en raison de l'élément de support (106).

6. Transmission à variation continue selon la revendication 5, dans laquelle
l'élément de support (106) comporte une douille (124) disposée sur la première extrémité (110) de l'arbre (104), et
la douille (124) s'étend le long de l'arbre (104).

7. Transmission à variation continue selon l'une quelconque des revendications 1 à 6, dans laquelle
le mécanisme de détection de position (100) comporte en outre un ressort de torsion (108) et un élément de support (106), le ressort de torsion (108) poussant l'arbre (104) vers un côté d'un sens de rotation de l'arbre (104), l'élément de support (106) supportant l'arbre (104),
le ressort de torsion (108) comporte une première partie droite (108a) et une seconde partie droite (108b), la première partie droite (108a) s'étendant en ligne droite, la première partie droite (108a) étant couplée à l'élément de support (106), la seconde partie droite (108b) s'étendant en ligne droite, la seconde partie droite (108b) étant couplée à l'arbre (104), et
la seconde partie droite (108b) s'étend dans une direction identique à celle de la première partie droite (108a) de manière à être disposée sur une ligne imaginaire identique à celle de la première partie droite (108a) lorsqu'on regarde dans la direction d'extension d'un axe central du ressort de torsion (108).

8. Transmission à variation continue selon la revendication 7, dans laquelle
le ressort de torsion (108) comporte en outre une partie en crochet (108c) prévue à proximité de la seconde partie droite (108b), et
la partie en crochet (108c) a une forme de crochet, la partie en crochet (108) étant en prise avec une surface périphérique extérieure de l'arbre (104).

9. Véhicule à enfourcher (1) comprenant la transmission à variation continue (15) telle que décrite dans l'une quelconque des revendications 1 à 8.
